Europäisches Patentamt

European Patent Office

Office européen des brevets

(19)

(11) Numéro de publication: **0 192 901**

**A1**

(12) **DEMANDE DE BREVET EUROPEEN**

(21) Numéro de dépôt: **85400384.5**

(22) Date de dépôt: **28.02.85**

(51) Int. Cl.⁴: **A 01 K 79/00**

(43) Date de publication de la demande:
**03.09.86 Bulletin 86/36**

(84) Etats contractants désignés:
**AT BE CH DE GB IT LI NL SE**

(71) Demandeur: **Chureau, Bernard**
**9 rue du Fan**
**F-44420 La Turballe(FR)**

(72) Inventeur: **Chureau, Bernard**
**9 rue du Fan**
**F-44420 La Turballe(FR)**

(74) Mandataire: **Lemonnier, André**
**4 Boulevard Saint-Denis**
**F-75010 Paris(FR)**

(54) **Appareil pour le triage des hameçons déformés ou cassés sur les lignes dites palangres.**

(57) Cet appareil comporte un dispositif positionneur d'hameçon amenant l'hameçon 3 à circuler en étant tiré par l'avançon 2 et guidé par la hampe 4 dans une glissière 15, d'où la section transversale correspond. Ladite glissière est de section transversale correspondant à la courbure normale 5 de l'hameçon lorsque la hampe 4 est disposée selon la direction axiale du canal de la glissière 15; la pointe et l'ardillon 6 circulant à l'intérieur de la glissière et au moins un premier détecteur 40 de type quelconque détecte, dans le cas d'un hameçon non cassé, la présence de la pointe et de l'ardillon 6, d'autres détecteurs pouvant détecter la déformation de la hampe et un dispositif sélecteur 16 asservi à ces détecteurs discrimine les hameçons non utilisables.

Fig.3

EP 0 192 901 A1

## Appareil pour le triage des hameçons déformés ou cassés sur les lignes dites palangres.

La palangre est une ligne dormante pour la pêche en mer qui est formée d'une ligne maîtresse sur laquelle sont fixés de place en place des avançons portant à leur autre extrémité chacun un hameçon. Une ligne maîtresse a une longueur de plusieurs centaines de mètres et chaque palangre porte plusieurs centaines d'hameçons, l'écartement moyen se situant entre trois et cinq mètres avec des avançons de un mètre à un mètre cinquante de long.

Pour automatiser la pêche à la palangre, automatisation rendue nécessaire par les vitesses actuelles de filage et de halage à bord ou virage de la palangre, on a proposé des machines à boetter telles que celle décrite dans la demande française N° 83 07443 du 4 Mai 1983 qui fixent l'appât sur l'hameçon au moment du filage de la ligne et des machines à débesquer telles que celle décrite dans la demande française N° 83 07444 du 4 Mai 1983 qui détachent le poisson ou le reste d'appât de l'hameçon alors que la maîtresse est halée par un vireur et stockent la palangre dans un magasin, la ligne étant suspendue par ses hameçons accrochés sur un rail. La machine à boetter reprend la palangre à partir du magasin. Si il est facile de répérer les hameçons dont l'avançon a été coupé par la machine à débesquer et ceux cassés au droit de la tige parce que leurs avançons pendent sous la ligne, il est impossible de repérer les hameçons ouverts ou déformés parce que les hameçons défilent à une cadence pouvant atteindre 2000 hameçons à l'heure.

En outre pour certaines pêches et pour éviter que les appâts ne reposent sur le fond, on munit la palangre de flotteurs et de lests, en général quelques maillons de chaîne, qui sont intercalés de façon alternée entre les hameçons et fixés sur la maîtresse par des avançons.

La présente invention a pour but de réaliser un appareil assurant automatiquement le triage des hameçons déformés ou dont la pointe est cassée sur les lignes dites palangres soit entre la sortie du débesqueur et le magasin de stockage de la palangre, soit au cours d'une opération de vérification à bord ou à terre de l'état des hameçons des palangres.

Elle a également pour but de réaliser un tel appareil dans lequel les flotteurs et lests de la palangre sont écartés de l'entrée de l'appareil à trier.

L'appareil conforme à l'invention comporte essentiellement, en combinaison, un dispositif positionneur d'hameçon amenant l'hameçon à circuler, en étant tiré par l'avançon et guidé par sa hampe, dans une glissière dont la section transversale correspond à la courbure normale de l'hameçon lorsque la hampe est disposée selon la direction axiale du canal de la glissière dans lequel s'ouvre la fente de passage de l'avançon, la pointe et l'ardillon circulant à l'extérieur de la glissière, un premier détecteur de type quelconque pour

3          **0192901**

détecter au moins la présence de la pointe et de l'ardillon dans la position correspondant à l'hameçon non déformé et/ou l'absence d'une ouverture de la courbure et un dispositif sélecteur asservi à ce détecteur pour discriminer les hameçons déformés ou cassés.

Le dispositif sélecteur peut séparer les hameçons conformes des hameçons déformés en dirigeant, par un aiguillage, les hameçons déformés vers un magasin distinct, il peut éjecter les hameçons déformés par coupe de l'avançon ou il peut signaler la présence d'un hameçon défectueux et/ou arrêter le défilement de la maîtresse.

Le dispositif positionneur d'hameçon peut être tout dispositif d'un type quelconque connu assurant l'engagement, avec une orientation spatiale définie, de l'hameçon dans la glissière de guidage. Un mode de réalisation préférentiel est décrit dans la demande de brevet française N° 83 07443 du 4 Mai 1983 au nom du demandeur pour "Machine à boetter pour la pêche à la palangre" et il sera décrit en détail ci-après.

L'invention n'est toutefois pas limitée à ce dispositif positionneur, ni à des palangres avec hameçons dit renversés pour lesquels est conçue la glissière de guidage de ce positionneur, la section de la glissière pouvant être adaptée au type particulier d'hameçon utilisé qui peut être guidé avec la pointe présentant une orientation quelconque.

Le détecteur assurant la détection de la présence de la pointe et de l'ardillon dans la position correspondant à l'hameçon non déformé peut-être un détecteur à occultation, la pointe et l'ardillon passant dans le faisceau entre un émetteur et un capteur d'un rayonnement de type quelconque, un détecteur volumétrique de masse, un détecteur pneumatique, etc. Le détecteur peut également être sensible à une ouverture de la courbure de l'hameçon. En effet, dans la pratique, la casse de la pointe ou de l'ardillon s'accompagne presque toujours d'une ouverture de la courbure. En conséquence un hameçon défectueux par casse de la pointe et/ou de l'ardillon présentera presqu'obligatoirement une extrémité libre de la courbure plus éloignée de la hampe que la pointe d'un hameçon normal. On peut donc, au lieu de détecter la présence de la pointe et de l'ardillon, détecter un écartement, supérieur à l'écartement entre hampe et pointe d'un hameçon normal, de l'hameçon soumis à la détection. Ceci peut être assuré soit par un des détecteurs ci-dessus, soit par un détecteur mécanique coopérant avec la glissière de guidage pour être accroché par la pointe ou l'extrémité libre d'un hameçon ouvert.

Enfin un hameçon peut être rendu moins efficace par une déformation de la hampe et/ou de la courbure, par exemple par une torsion ou un écrasement d'un hameçon dit renversé. Une telle déformation se traduit par une non conformité de la forme de l'hameçon avec la section théorique de la glissière de guidage laquelle doit présenter des tolérances assez étroites pour obtenir un positionnement de la pointe suffisamment précis pour en permettre la détection. Les tolérances étroites de la section de la glissière de guidage risquent d'entraîner un coïncement de l'hameçon en cas de déformation même légère. En conséquence et selon une autre caractéristique de l'invention, au moins certaines parties de la paroi définissant la glissière de guidage sont mobiles élastiquement dans une direction accroissant la section. Ce déplacement peut être utilisé, lorsqu'il dépasse une amplitude donnée, pour détecter une déformation de la hampe et/ou de la courbure et commander un second détecteur associé au premier détecteur pour commander le dispositif sélecteur.

Selon une autre caractéristique de l'invention un dispositif séparateur, pour écarter de l'entrée du dispositif positionneur les lests et flotteurs, est prévu en amont de l'appareil de triage. Ce dispositif séparateur est, par exemple, constitué par une porte qui est ouverte, pour laisser passer le lest ou le flotteur, par le volume de l'élément lui-même guidé selon une trajectoire l'amenant au contact de ladite porte. De préférence la porte est une porte à deux battants pivotants, les pivotements de même sens étant synchronisés pour assurer le passage en biais entre les bords des deux battants de l'élément poussé contre l'un des battants.

Selon une autre caractéristique, les battants sont constitués chacun par deux éléments séparés par un interstice pour le passage des avançons, les éléments de chaque battant et les deux battants étant synchronisés dans leurs déplacements par des biellettes articulées excentriquement sur un cylindre formant guide parallèle aux axes d'articulation des battants et autour duquel sont déviés les lests et flotteurs.

L'invention sera décrite plus en détail ci-après avec référence aux dessins ci-annexés dans lesquels :

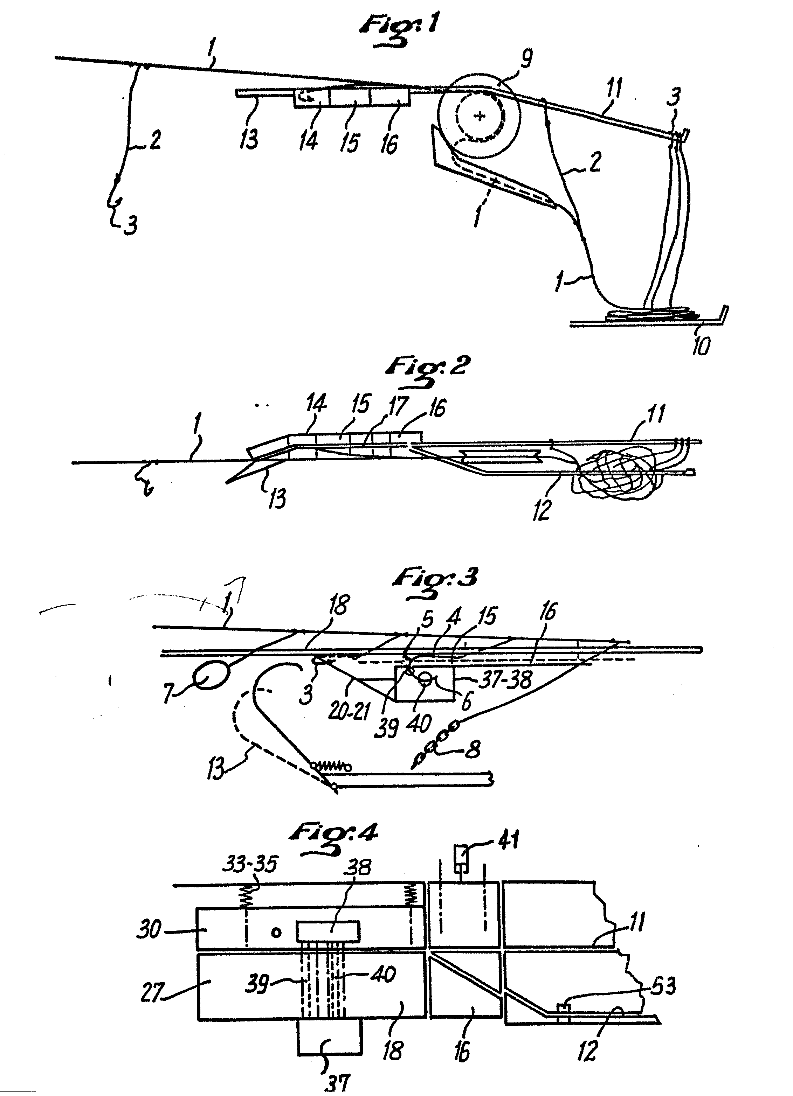

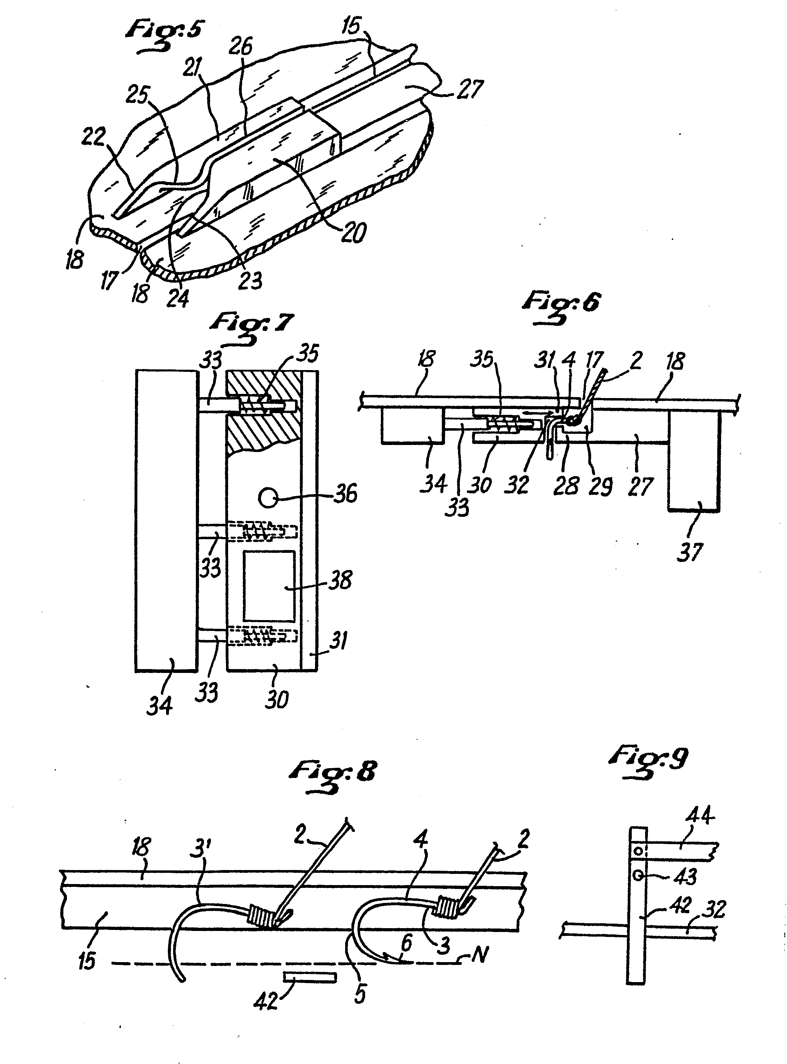

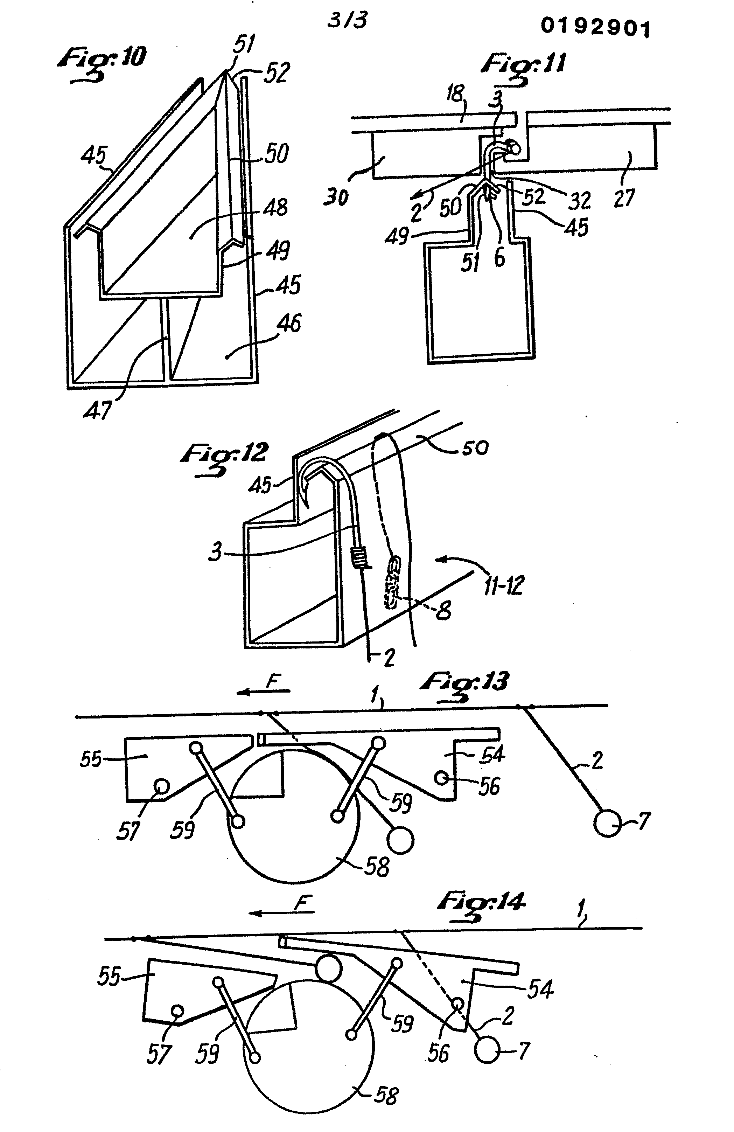

La figure 1 est un schéma d'ensemble en élévation latérale de l'appareil; la figure 2 est un schéma d'ensemble en plan; la figure 3 est un schéma en élévation de la partie principale de l'appareil et la figure 4 en est un schéma en plan; la figure 5 est une vue en perspective par dessous du nez de positionnement de la glissière; la figure 6 est une vue en coupe transversale de la glissière et la figure 7 est une vue par dessous du rail mobile de la glissière; la figure 8 est une vue en élévation schématique d'un détecteur mécanique de la déformation et la figure 9 en est une vue en plan de détail; la figure 10 est une vue en perspective par l'aval
du dispositif d'aiguillage; la figure 11 est
une vue explicative de son fonctionnement et
la figure 12 une vue du rail de stockage des
hameçons; la figure 13 est un schéma en élévation
du séparateur des lests et flotteurs et la figure
14 illustre le séparateur en position d'ouverture.

Dans les dessins, la référence 1 désigne la ligne mère de
la palangre, 2 les avançons et 3 les hameçons qui sont du
type dit "renversé" dans lesquels la référence 4 désigne
la hampe, 5 la courbure et 6 la pointe et l'ardillon. La
référence 7 désigne les flotteurs et 8 les lests constitués
par des bouts de chaîne.

Dans les modes de réalisation illustrés, l'appareil est
monté en avant du cabestan de halage 9 qui tire la ligne
mère pour l'entasser sur un plateau 10, les hameçons conformes
étant rangés sur un rail 11 et arrêtés par une butée souple en bout
et les hameçons non conformes rangés sur un rail 12.

L'appareil proprement dit comporte, de l'amont vers l'aval,
un séparateur 13 pour écarter les lests et flotteurs de l'appareil de triage, un positionneur 14 qui oriente l'hameçon
pour qu'il s'engage en position correcte dans une glissière
15 sur laquelle sont montés les détecteurs, un aiguillage
16 asservi aux détecteurs pour diriger les hameçons sur le
rail 11 ou sur le rail 12 selon le résultat des détections.
Ces différentes parties constitutives seront décrites plus
en détail ci-après, le séparateur pouvant ne pas exister
si la palangre ne comporte ni lests, ni flotteurs.

L'appareil est du type dans lequel l'hameçon circule pointe
en bas pour faciliter le positionnement des hameçons 3 qui
se présentent suspendus aux avançons. La ligne mère 1 circule
au dessus de l'appareil et latéralement, l'avançon 2 passant
dans une fente 17 dans la table supérieure 18 de l'appareil.

Le dispositif positionneur 14 comporte (figure 5), sous la fente 17, un tube transversal de gros diamètre (non représenté) sur lequel la pointe de l'hameçon tiré par l'avançon se trouve rejetée vers la droite ou vers la gauche. Au-dessus de ce tube se trouvent les pointes des deux nez de rails 20-21 de la glissière. Ces nez comportent une rampe 22-23 qui redresse la pointe 6 de l'hameçon pour la faire pointer vers le bas et la courbure 5 de l'hameçon coopère, selon que l'hameçon a été rejeté vers la gauche ou la droite, avec les cames d'engagement 24-25 qui font tourner le plan de la courbure autour de la hampe 4 qui est tirée vers la face inférieure de la table 18 par l'avançon 2 engagé dans la fente 17. L'hameçon est ainsi engagé avec le plan de sa courbure 5 passant dans la fente 26. Les nez des rails se prolongent sous la table 18 par la glissière 15 de hauteur réduite pour dégager la pointe ou la courbure de l'hameçon.

La glissière 15 (figures 6 et 7) se compose d'un rail fixe 27 fixé sous la table 18 et dont une face latérale coïncide sensiblement avec un bord de la fente 17. Le rail 27 se prolonge sous la fente 17 par une aile latérale en L 28 qui forme un canal 29 pour le guidage de la palette ou de l'anneau et de la hampe 4 de l'hameçon. La glissière est complétée par un rail mobile 30 qui vient par son nez 31 délimiter la partie latérale supérieure du canal 29 et qui, par sa face latérale aboutissant au nez, forme une fente en L 32 pour le passage de la racine de la courbure 5 de l'hameçon. Ce rail 30 est guidé mobile sous la plaque 18, pour pouvoir s'écarter du rail 27 et élargir la fente 32, par des broches de guidage 33 portées par un socle 34. Le rail 30 est sollicité vers le rail 27 par des ressorts de compression 35.

Avec cette constitution de la glissière un hameçon déformé dont la hampe est par exemple tordue peut passer dans la glissière en écartant le rail 30 du rail 27. Ce déplacement peut, lorsqu'il excède une certaine limite de tolérance, être décelé par un capteur de position 36 d'un type quelconque connu, par exemple une cellule photo-sensible coopérant avec un émetteur (non représenté) porté par le socle 34.

Avec la glissière 15 sont associés deux blocs opto-électroniques, l'un émetteur 37, l'autre récepteur 38, placés de part et d'autre de la glissière. Le bloc récepteur 38 est représenté porté par le rail mobile 30 mais cette disposition est optionnelle. Les groupes opto-électroniques 37-38 présentent deux faisceaux de détection 39 et 40 (figures 3 et 4). Le faisceau 39 détecte le passage de la courbure 5 et le faisceau 40 la présence de la pointe et de l'ardillon. Comme indiqué ci-dessus la détection peut être assurée par une multitude de systèmes connus à photo-résistance, photo-diode, cellule photo-sensible, ultra-sons, infrarouge, laser, détection volumétrique de masse, détecteur pneumatique, etc.

Les signaux obtenus sont traités pour déterminer si la pointe et l'ardillon 6 dont la présence correspond à une certaine intensité du faisceau 40, existent et sont dans une position correcte par rapport à la courbure 5 détectée par le faisceau 39. La sortie correspondant à un hameçon conforme, associée à l'absence de sortie du détecteur 36, laisse le dispositif d'aiguillage 16 dans la position neutre dirigeant l'hameçon vers le rail 11 alors que la sortie correspondant à un hameçon non conforme ou une sortie du détecteur 36 déterminent le déplacement de l'aiguillage 16 pour diriger l'hameçon non conforme sur le rail 12.

Dans la figure 4 l'aiguillage 16 est déplacé par un vérin ou un solénoïde 41.

Comme exposé ci-dessus la casse de la pointe et de l'ardillon 6 correspond presque toujours à une ouverture de la courbure 5. Dans la figure 8 on a représenté la position dans la glissière d'un hameçon 3 conforme et d'un hameçon ouvert 3'. La pointe 6 de l'hameçon 3 a une trajectoire par rapport à la glissière indiquée par la ligne N alors que la pointe de l'hameçon ouvert 3' est à une plus grande distance. Il est donc possible de monter sous la glissière 15 un palpeur mécanique 42, par exemple un petit levier articulé en 43 sous la glissière et qui se trouve très près du niveau N. Les hameçons 3 n'accrochent pas le palpeur alors que la pointe des hameçons ouverts 3' l'accroche et l'entraine, le mouvement de pivotement pouvant entrainer une biellette de transmission 44 basculant l'aiguillage pour envoyer l'hameçon sur le rail 12.

L'aiguillage peut être constitué par exemple comme illustré aux figures 10 et 11. Il comporte deux parois formant contre-aiguilles latérales 45 réunies par une plaque de base 46. Cette plaque de base porte par une tôle verticale 47 la plaque de base de la pointe d'aiguille 48 repliée le long de ses bords pour donner deux parois verticales 49 dont le bord supérieur est replié en cornière en 50. Les deux rails cornières 50 se réunissent en une pointe 51, les bords 52 des ailes extérieures des rails étant recoupés obliquement à partir de la pointe. Le fonctionnement de l'aiguillage sera décrit ci-après avec référence à la figure 11 dans laquelle seule une branche de l'aiguillage a été représentée pour simplifier les dessins. L'aiguillage est monté immédiatement en aval de la glissière à l'extrémité des rails 27 et 30 de manière que l'hameçon 3 soit amené à la pointe 51 de l'aiguillage en étant guidé dans la fente 32. La pointe 51 de l'aiguillage est amenée sensiblement en coïncidence avec l'extrémité de l'un ou l'autre des bords de la fente 32 de manière que le bord 52 du rail 50 sur lequel l'hameçon doit être dirigé recoupe la largeur de la fente 32. La pointe 6 de l'hameçon tiré par l'avançon 2 s'engage à l'intérieur de la cornière formant le rail 50 et la courbure vient buter contre le bord 52 ce qui fait pivoter l'hameçon dont la courbure s'engage dans l'interstice entre le bord du rail 50 et la paroi formant contre aiguille latérale 45. Lorsque l'hameçon 3 se trouve sur le rail 11 ou 12 qui fait suite à l'aiguillage et n'est plus tiré par son avançon il prend, sur le rail qui a une section analogue aux rails de l'aiguillage,la position illustrée sur la figure 12. Les lests 8 et les flotteurs 9 peuvent être stockés sur les mêmes rails, leurs avançons étant réintroduits en aval de l'aiguillage dans l'interstice entre le bord du rail 50 et la paroi latérale formant contre-rail 45.

Si la position normale de l'aiguillage est celle envoyant les hameçons 3 sur le rail 11 des hameçons conformes, un détecteur 53 détecte le passage d'un hameçon non conforme sur le rail 12 pour commander le retour de l'aiguillage en position normale (figure 4).

Un exemple non limitatif de réalisation du séparateur 13 est illustré aux figures 13 et 14. La ligne 1 défile dans le sens de la flèche F et les flotteurs 7 qui ont seuls été représentés sont suspendus sous la ligne par leur avançon 2 qui s'engage dans une fente correspondant à la fente 17. Sur la longueur du séparateur cette fente sépare les demi-battants 54,54 et 55,55 respectivement,seul l'un des demi-battants 54-55 étant représenté au dessin. Ces demi-battants 54-55 sont montés à rotation autour de demi-axes 56-57, les deux demi-axes 56 et les deux demi-axes 57 laissant entre eux un interstice pour le libre passage des avançons 2 qui peuvent suspendre, non seulement des lests ou flotteurs à faire passer au-dessus du niveau de la table 18 qui est de niveau avec la face supérieure des demi-battants,mais les hameçons qui doivent rester en dessous du niveau de la table 18. Entre les axes 56 et 57 est monté à rotation un cylindre 58 et les demi-battants 54,55 sont reliés à ce cylindre par des biellettes 59 articulées sur les faces latérales du cylindre 58, l'espace entre la périphérie de ce cylindre 58 et

11 0192901

les faces inférieures des demi-battants 54,55 est tel que
les hameçons peuvent passer librement mais les lests et flotteurs qui passent autour du cylindre 58 viennent au contraire
au contact de la face inférieure des demi-battants 54 et
les font tourner autour de leur axe 56. La rotation des demi-
battants 54 est synchronisée entre eux et transmise au cylindre
58 par les biellettes 59, cette rotation étant également
transmise par les biellettes 59 correspondant aux demi-battants
55 dont la pointe s'abaisse pour que le flotteur 7 ou le
lest 8 qui glisse sur la surface du cylindre 58 s'engage
au-dessus de la surface supérieure des demi-battants 55.
Après le passage d'un lest ou flotteur, les demi-battants
54-55 reviennent dans la position de la figure 13.

1  0192901

Revendications

1. Un appareil à trier les hameçons déformés pour la pêche
à la palangre,
caractérisé en ce qu'il comporte essentiellement, en combinaison, un dispositif positionneur 14 d'hameçon amenant l'hameçon
3 à circuler, en étant tiré par l'avançon 2 et guidé par
sa hampe 4, dans une glissière 15 dont la section transversale
correspond à la courbure normale 5 de l'hameçon lorsque la
hampe 4 est disposée selon la direction axiale du canal 29
de la glissière 15 dans lequel s'ouvre la fente 17 de passage
de l'avançon 2, la pointe et l'ardillon 6 circulant à l'extérieur de la glissière, un premier détecteur (37-38,42) de
type quelconque pour détecter au moins la présence de la
pointe et de l'ardillon 6 dans la position correspondant
à l'hameçon non déformé et/ou l'absence d'une ouverture de
la courbure et un dispositif sélecteur (16) asservi à ce
détecteur pour discriminer les hameçons déformés ou cassés.

2. Un appareil selon la revendication 1,
caractérisé en ce que le dispositif sélecteur sépare les
hameçons conformes 3 des hameçons déformés 3' en dirigeant,
par un aiguillage 16, les hameçons déformés 3' vers un magasin
distinct ou éjecte les hameçons déformés par coupe de l'avançon
2 ou signale la présence d'un hameçon défectueux et/ou arrête
le défilement de la maîtresse 1.

3. Un appareil selon la revendication 1 comportant un dispositif positionneur 14 d'hameçon pouvant être tout dispositif
d'un type quelconque connu,
caractérisé en ce qu'il assure l'engagement, avec une orientation spatiale définie, de l'hameçon 3 dans la glissière
15 de guidage.

4. Un appareil selon la revendication 1,

caractérisé en ce que le détecteur 37-38 est un détecteur du type émetteur et capteur de rayonnement quelconque, un détecteur volumétrique de masse.

5. Un appareil selon l'une quelconque des revendications 1 à 4, caractérisé en ce qu'il comporte, en combinaison avec le détecteur (40) de la présence de la pointe et de l'ardillon (6), un détecteur (39) de présence de la courbure (5) pour contrôler l'exactitude de leur position relative.

6. Un appareil selon la revendication 1, caractérisé en ce que le détecteur est sensible à l'ouverture de la courbure 5 de l'hameçon.

7. Un appareil selon la revendication 6, caractérisé en ce que le détecteur d'ouverture de la courbure 5 de l'hameçon est un détecteur mécanique 42, qui est accroché par la pointe de l'hameçon (3') déformé circulant dans la glissière de guidage 15.

8. Un appareil selon la revendication 1, caractérisé en ce qu'au moins une partie de la paroi 30, délimitant le canal de guidage (29-32) de l'hameçon, de la glissière 15 est mobile élastiquement dans une direction accroissant la section du canal de manière à pouvoir détecter une déformation de la hampe (4) èt/ou la courbure 5 et commander, le dispositif sélecteur (16).

9. Un appareil selon la revendication 1, caractérisé en ce qu'un dispositif séparateur 13 écarte les lests 8 et les flotteurs 7 du dispositif positionneur 14.

10. Un appareil selon l'une quelconque des revendications 1 et 9, caractérisé en ce que le dispositif séparateur 13 est constitué par une porte qui est ouverte, pour laisser passer le lest 8 ou le flotteur 7, par le volume de l'élément lui-même guidé selon une trajectoire l'amenant au contact de ladite porte.

11. Un appareil selon l'une quelconque des revendications 1 et 10,
caractérisé en ce que la porte est une porte à deux battants 55-54 pivotants, les pivotements de même sens étant synchronisés pour assurer le passage en biais entre les bords des deux battants de l'élément poussé contre l'un des battants.

*Fig:1*

*Fig:2*

*Fig:3*

*Fig:4*

2/3

0192901

Fig:5

Fig:7

Fig:6

Fig:8

Fig:9

0192901

Fig.10

Fig.11

Fig.12

Fig.13

Fig.14

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl 4) |
|---|---|---|---|
| A | US-A-3 377 733 (GODO) | | A 01 K 79/00 |
| A | FR-A-2 370 428 (KOLBJORN BJORSHOL) | | |
| A | FR-A-2 545 322 (CHUREAU) | | |

| | | | DOMAINES TECHNIQUES RECHERCHES (Int Cl.4) |
|---|---|---|---|
| | | | A 01 K |

Le présent rapport de recherche a été établi pour toutes les revendications

| Lieu de la recherche | Date d'achèvement de la recherche | Examinateur |
|---|---|---|
| LA HAYE | 07-06-1985 | VERDOODT S.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82